# EUROPEAN PATENT SPECIFICATION

(11) **EP 3 418 103 B1**
(45) Date of publication and mention of the grant of the patent: **18.11.2020**
(21) Application number: 18173089.6
(22) Date of filing: 18.05.2018
(51) Int. Cl.: H01M 2/10

(54) **VEHICLE SAFETY SENSOR MODULE WITH COMMUNICATION TO FIRST RESPONDERS**
FAHRZEUGSICHERHEITSSENSORMODUL MIT KOMMUNIKATION ZU ERSTHELFERN
MODULE DE CAPTEUR DE SÉCURITÉ COMPORTANT UNE COMMUNICATION POUR LES PREMIERES PERSONNES INTERVENANT SUR LE VÉHICULE

(30) Priority: 19.06.2017 US 201715626692; 27.07.2017 US 201715661536
(43) Date of publication of application: 26.12.2018
(73) Proprietor: Dura Operating, LLC, Auburn Hills, MI 48326 (US)
(72) Inventor: STACHEWICZ, Aaron Brion, Troy, MI Michigan 48083 (US); UNVEREN, Cumhur, Walled Lake, MI Michigan 48390 (US); PAGE, Indraneel Krishna, Farmington Hills, MI 48335 (US)
(74) Representative: btb IP Bungartz Baltzer Partnerschaft mbB Patentanwälte

(56) References cited:
- US-A1- 2011 111 269
- US-A1- 2012 150 393

## Description

### FIELD

The present disclosure relates generally to vehicle system condition sensing and vehicle system condition transmission systems, including emergency responder signaling.

### BACKGROUND

The statements in this section merely provide background information related to the present disclosure and may or may not constitute prior art.

Automobile vehicles including electric vehicles and hybrid vehicles providing at least partial propulsion from battery power create unique conditions that must be considered due to the energy and fluid in the battery packs provided with the vehicle when the vehicle is disabled or in an accident. A first responder such as a fire truck or tow vehicle which approaches a battery and hybrid powered vehicle needs to take action to discharge the battery pack to reduce possible spark and fire conditions. Known battery and hybrid powered vehicle battery packs are accessible via a power charging connection, however this connection may not be available to a first responder after a collision or other accident.

The battery packs of known battery powered and hybrid or battery-engine powered vehicles, hereinafter collectively referred to as "battery powered" vehicles, also do not provide a common communication system to collect all battery pack sensor output which is then made available to the vehicle operator and outside of the vehicle such as to first responders.

US laid open patent applications US 2012/0150393 A1 and US 2011/0111269 A1 show battery monitor or battery management systems. Thus, while current vehicle battery pack systems achieve their intended purpose, there is a need for a new and improved system and method for collecting.

### SUMMARY

According to several aspects, a battery system for a vehicle is provided, the battery system includes: a battery pack having a structure defining a chamber receiving a battery, the structure including a frame having an outer wall defining a portion of the chamber; a first sensor mounted to the structure for sensing an operating condition of the battery system within the chamber, the first sensor mounted within the chamber on the inside of the outer wall of the chamber; and a safety module disposed outside of the chamber, the safety module processing signals received from the first sensor to identify if the operating condition defines an abnormal condition occurring within the chamber, the safety module sending a first safety module signal when the signals received from the first sensor indicate the an abnormal condition is present within the chamber. The battery system further comprises an impact sensor located within the safety module and the structure includes a bottom wall and the first sensor defines a moisture sensor positioned on the bottom wall and wherein the bottom wall includes a low point, with the moisture sensor positioned at the low point.

According to several aspects, a battery system for a vehicle includes a battery pack having a structure defining a chamber receiving a battery. A first sensor is mounted to the structure for sensing an operating condition within the chamber. A safety module is disposed outside of the chamber, the safety module processing signals received from the first sensor to identify if the operating condition defines an abnormal condition occurring within the chamber. The safety module sends a first safety module signal when the signals received from the first sensor indicate the abnormal condition is present within the chamber.

In another aspect of the present disclosure, the structure includes a frame having an outer wall defining a portion of the chamber, and the first sensor is attached to the outer wall.

In another aspect of the present disclosure, the first sensor is a smoke sensor mounted to the outer wall.

In another aspect of the present disclosure, the first sensor is gas sensor mounted to the structure.

In another aspect of the present disclosure, the outer wall is attached to a vehicle.

In another aspect of the present disclosure, the structure includes a bottom wall and the first sensor defines a moisture sensor positioned on the bottom wall.

In another aspect of the present disclosure, the bottom wall includes a low point, with the moisture sensor positioned at the low point.

In another aspect of the present disclosure, the battery includes multiple battery cells, the structure includes a cross beam defining a plurality of sub-chambers each receiving at least one of the multiple battery cells, and the first sensor defines multiple identical sensors having individual ones of the multiple identical sensors mounted in each of the sub-chambers.

In another aspect of the present disclosure, a second sensor is mounted within the chamber detecting an operating condition within the chamber different from the operating condition sensed by the first sensor, the safety module sending a second safety module signal when the signals received from the second sensor define abnormal conditions present within the chamber.

In another aspect of the present disclosure, a third sensor mounted outside of the chamber detecting a condition of the structure, the safety module processing signals from the third sensor to identify if an abnormal condition of the structure is present.

In another aspect of the present disclosure, the third sensor is included with the safety module.

In another aspect of the present disclosure, the safety module is mounted to the outer wall.

According to several aspects, a battery system for a vehicle includes a battery pack having a structure defining a chamber receiving a battery. A first sensor is mounted to the structure sensing conditions of the structure. A safety module is disposed outside of the chamber. The safety module processes signals received from the first sensor. The safety module sends a safety module signal when the signals received from the first sensor indicate an abnormal condition of the structure.

In another aspect of the present disclosure, the first sensor defines an accelerometer mounted to the structure.

In another aspect of the present disclosure, the first sensor defines a strain sensor mounted to the structure.

In another aspect of the present disclosure, the structure defines a frame having an outer wall defining the chamber; and the first sensor defines an impact sensor mounted to the structure.

In another aspect of the present disclosure, the safety module is mounted to the outer wall.

In another aspect of the present disclosure, a second sensor is mounted within the chamber detecting a condition within the chamber. The safety module further processes signals received from the second sensor to identify if an abnormal condition exists within the chamber.

In another aspect of the present disclosure, a third sensor is mounted outside the chamber detecting a second condition of the structure. The safety module further processes signals received from the third sensor to identify if an abnormal condition exists for the structure.

In another aspect of the present disclosure, the safety module includes the third sensor.

Further areas of applicability will become apparent from the description provided herein. It should be understood that the description and specific examples are intended for purposes of illustration only and are not intended to limit the scope of the present disclosure.

### DRAWINGS

The drawings described herein are for illustration purposes only and are not intended to limit the scope of the present disclosure in any way.
FIG. 1 is rear left perspective view of an automobile vehicle having a battery pack safety system for a battery powered vehicle according to an exemplary embodiment;
FIG. 2 is a top left perspective view of a battery pack of the present disclosure;
FIG. 3 is a cross sectional top plan view taken at section 3 of FIG. 2;
FIG. 4 is a top perspective view of area 4 of FIG. 3;
FIG. 5 is a cross sectional top plan view similar to FIG. 3;
FIG. 6 is a top left perspective view of area 6 of FIG. 5;
FIG. 7 is a cross sectional front elevational view taken at section 7 of FIG. 6;
FIG. 8 is a cross sectional top plan view similar to FIG. 3;
FIG. 9 is a top left perspective view of area 9 of FIG. 8;
FIG. 10 is a cross sectional top plan view similar to FIG. 3;
FIG. 11 is a diagrammatic presentation of the battery pack safety system for a battery powered vehicle according to an exemplary embodiment;
FIG. 12 is a front perspective view of the vehicle of FIG. 1; and
FIG. 13 is a bottom perspective view of area 13 of FIG. 2.

### DETAILED DESCRIPTION

The following description is merely exemplary in nature and is not intended to limit the present disclosure, application, or uses.

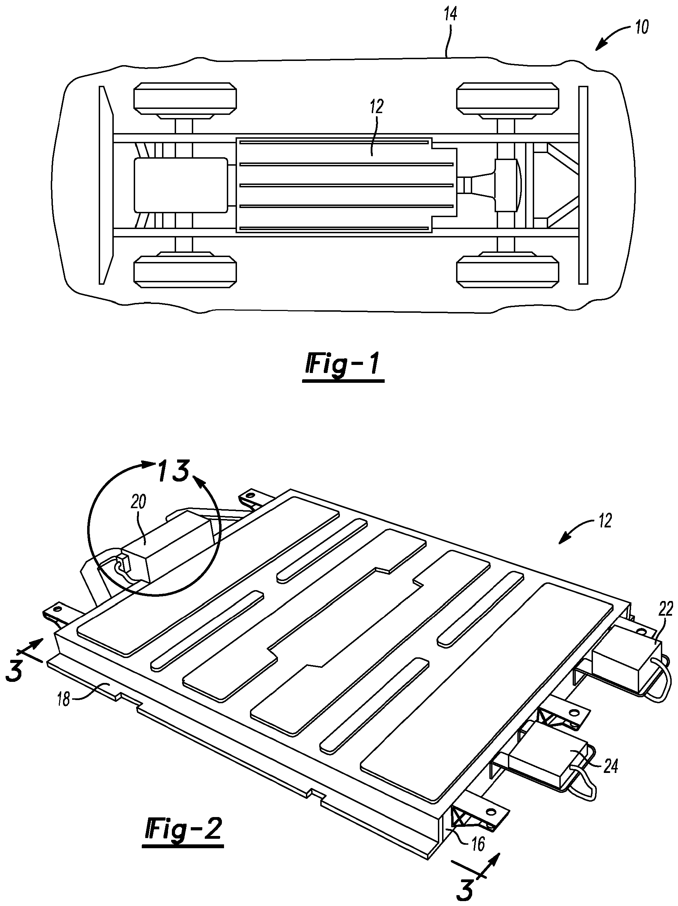

Referring to FIG. 1, a vehicle battery safety sensor system 10 is incorporated with with a battery unit or battery pack 12 mounted to a vehicle 14. The battery pack 12 provides an electrical charge as the sole power to propel the vehicle 14, or may provide supplemental power in addition to an engine (not shown).

Referring to FIG. 2 and again to FIG. 1, the vehicle battery safety sensor system 10 together with the battery pack 12 are supported using a structural unit or frame 16 made for example from one or more materials such as a metal including aluminum, or a combination of materials such as a metal and a polymeric material or a composite material. The frame 16 may provide one or more mounting flanges 18 to connect the frame 16 to structure of the vehicle 14. The vehicle battery safety sensor system 10 further includes a stranded energy discharge module 20 permitting battery cell discharge in the event of an accident, and a battery emergency response module 22 which can provide signals locally or remotely for a vehicle and a battery emergency condition. The vehicle battery safety sensor system 10 further includes a safety module 24 which will be described in greater detail below.

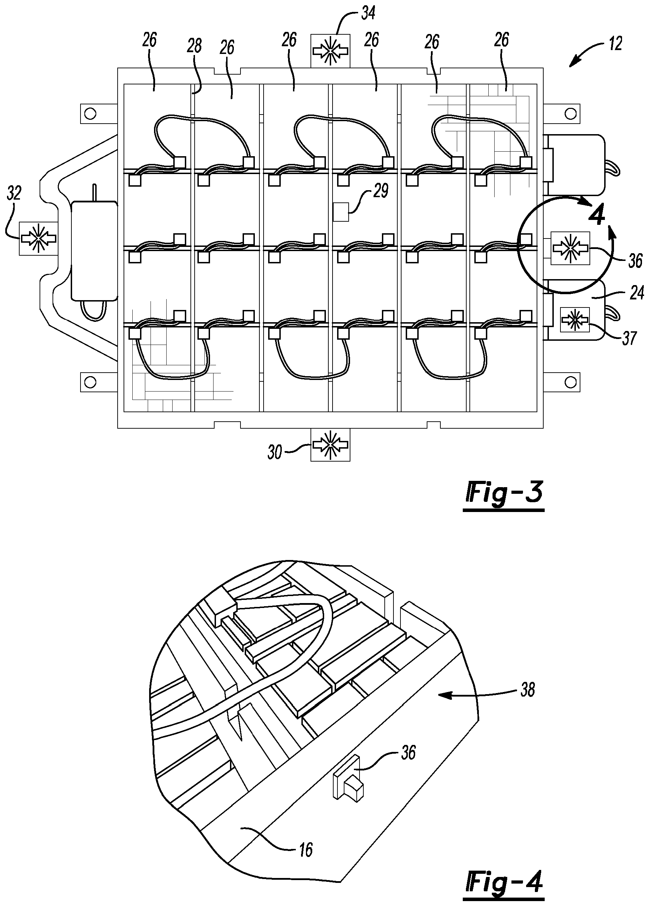

Referring to FIG. 3 and again to FIG. 2, the battery pack 12 includes at least one and according to several aspects multiple battery cells 26. Each successive pair of the battery cells 26 may be separated by a dividing barrier or cross beam 28. In further aspects, the battery cells 26 are not separated by cross beams, but are positioned in an open cell space, bay or chamber. According to several aspects, a battery leak methane gas sensor 29 can be provided within the battery pack 12 at a location conducive to sensing methane gas from any of the individual battery cells 26.

According to several aspects, the vehicle battery safety sensor system 10 provides at least one and according to several aspects multiple sensors connected to the frame 16 supporting the battery pack 12, including at least one impact sensor connected to one of the walls of the frame 16, or may include multiple impact sensors each connected to one or more of the walls of the frame 16, such as a first impact sensor 30, a second impact sensor 32, a third impact sensor 34 and a fourth impact sensor 36. According to several aspects, one impact sensor such as the first impact sensor 30 is mounted to one of the side walls. According to further aspects, one of the first, second, third, and fourth impact sensors 30, 32, 34, 36 is individually mounted to each one of the side walls of the battery pack 12, to provide sensed impact values for each side of the battery pack 12. An output from the impact sensor or sensors, such as from each of the first, second, third, and fourth impact sensors 30, 32, 34, 36 is communicated to the safety module 24. Each of the impact sensors may be provided in the form of an accelerometer or a strain gage.

According to several aspects, in lieu of the first, second, third, and fourth impact sensors 30, 32, 34, 36 being mounted to each of the side walls, a single impact sensor 37 is located in the safety module 24. The impact sensor 37 may be a microelectro-mechanical-system (MEMS) digital output motion sensor such as but not limited to an ultra-low power, high performance 3-axis FEMTO Accelerometer.

According to several aspects, the one or more impact sensors provide an output signal in response to a predefined structural loading applied to the frame 16. For example, when multiple impact sensors are provided, an output signal from any single one of the impact sensors may indicate a localized impact and damage to the area of the frame 16 where that impact sensor is mounted. An output from the impact sensors can be cumulatively collected as well. For example, a first predefined cumulative level of strain or impact energy may trigger an impact sensor output signal indicating damage less than total may require repair to the frame 16. Similarly, a second predefined cumulative level of strain may trigger an impact sensor output signal indicating a failure of the frame 16 has occurred. An output signal from the impact sensor 37 located in the safety module 24 may provide a collective loading of the frame 16, or in general a collective displacement of the battery pack 12.

Referring to FIG. 4 and again to FIG. 3, each of the impact sensors such as the exemplary fourth impact sensor 36 may be mounted to an outer facing wall 39 of the frame 16. The impact sensors can also be positioned differently than shown and therefore about any desired position of the frame 16.

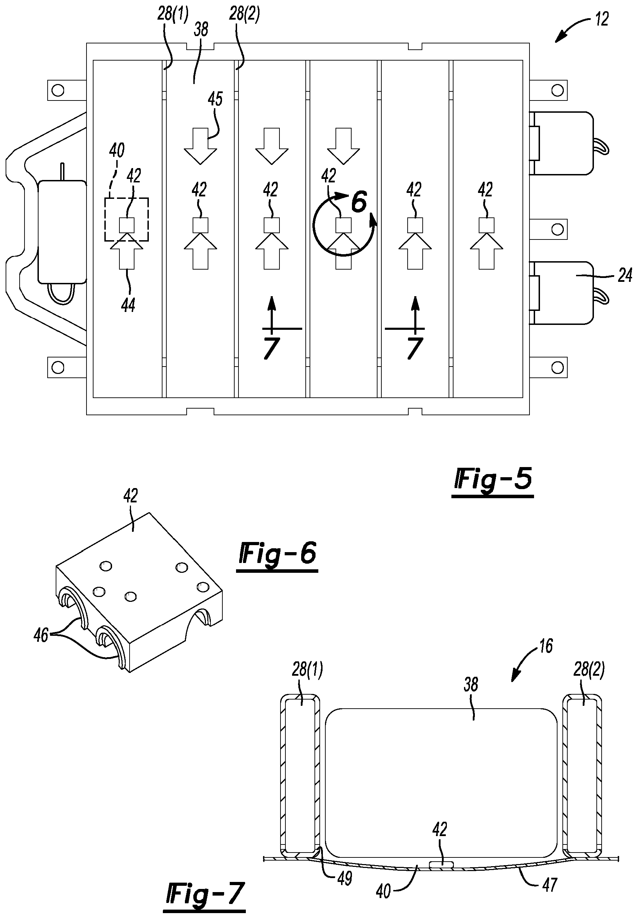

Referring to FIG. 5 and again to FIG. 2, the frame 16 of the battery pack 12 may include a single large battery cell bay or chamber, or may include multiple battery cell bays or chambers such as an exemplary battery cell bay 38 which may be bounded between successive cross beams 28, such as between cross beams 28(1), 28(2). In order to collect any fluid leakage that may occur from the battery cells, and also to collect any moisture such a water that may enter the battery pack 12, each of the battery cell bays 38 can include a low point 40. Moisture or battery fluid entering the battery cell bays 38 collects at each low point 40 and is sensed by a moisture sensor 42 such as a water or battery fluid sensor positioned at the low point 40. When fluid is present and triggers an output signal, the output signal from each of the multiple moisture sensors 42 is communicated to the safety module 24. If desired, a particular battery cell bay 38 wherein one of the moisture sensors 42 triggers may be identified by the vehicle battery safety sensor system 10 of the present disclosure. Flow direction arrows 44 indicate a general flow direction of fluid toward the moisture sensors 42 from one side of the frame 16, and oppositely directed flow arrows 45 indicate a general flow direction of fluid toward the moisture sensors 42 from an opposite side of the frame 16. Although the moisture sensors 42 are depicted positioned substantially in a central location of each of the battery cell bays 38, the low points 40, and therefore the position of the moisture sensors 42 can be moved toward either side of the frame 16 from those shown.

Referring to FIG. 6 and again to FIG. 5, each of the moisture sensors 42 can be a singular sensor, or according to several aspects can be provided as a double sensor 46 as shown. The use of double sensors 46 provides redundancy and an increased accuracy in the sensed moisture level.

Referring to FIG. 7 and again to FIGS. 5 and 6, a bottom wall 47 of the frame 16 can be curved or pitched downwardly from each of successive ones of the cross beams 28, such as between cross beams 28(1), 28(2) toward the centrally located low point 40. The low point 40 can also be positioned to the left or to the right of the low point 40 as shown in FIG. 7 as desired, as well as toward or away from the viewer. According to several aspects a single low point 40 can also be provided for the entire frame 16, with weep holes 49 allowing fluid flow though each of the cross beams 28 to allow all fluid to collect in the single low point 40, and with a common pitch of the battery pack 12 such as at a one degree downward angle that aids in the flow of liquid to the low point 40.

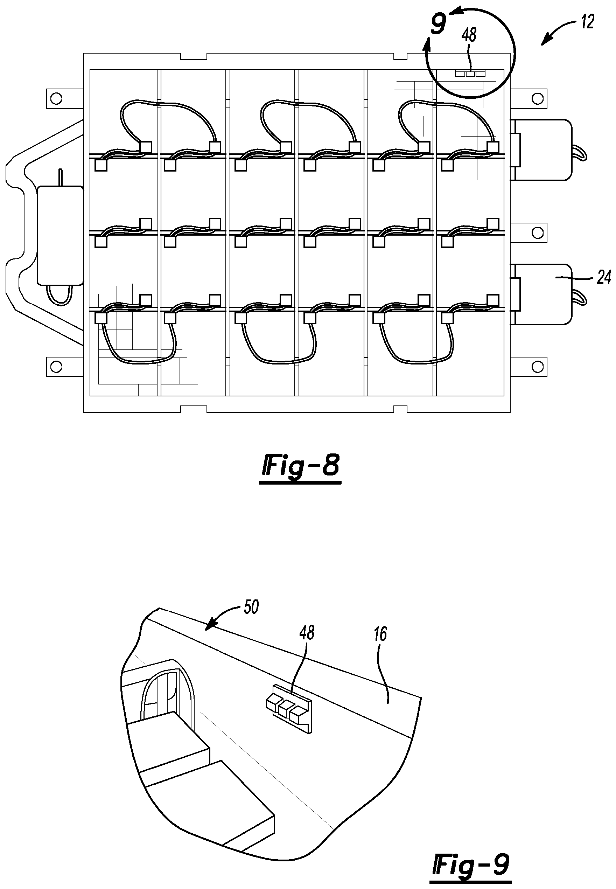

Referring to FIGS. 8 and 9, and again to FIGS. 2 and 3, the vehicle battery safety sensor system 10 can further include one or more smoke sensors 48. The smoke sensors 48 can detect heat or smoke, and can be mounted to an inside wall 50 of the frame 16, for example at opposing inside corners of the frame 16. The output signal from each of the multiple smoke sensors 48 is communicated to the safety module 24.

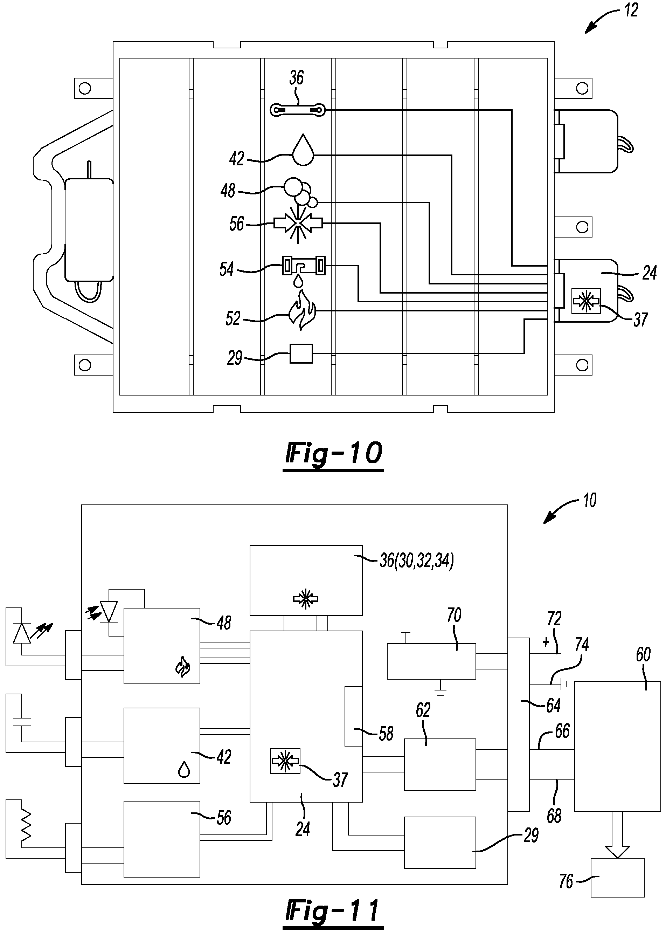

Referring to FIG. 10 and again to FIGS. 2 through 9, in addition to the above noted battery leak methane gas sensor 29, the one or more of the first, second, third, and fourth impact sensors 30, 32, 34, 36, the impact sensor 37, the moisture sensors 42, and the smoke sensors 48, the vehicle battery safety sensor system 10 can further include one or more of each of a combination fire and smoke sensor 52, at least one battery fluid leak sensor 54 and at least one accelerometer 56. The output signals from all of the sensors of the battery pack 12 are communicated to the safety module 24, with the impact sensor 37 already present in the safety module.

Referring to FIG. 11 and again to FIGS. 1 through 10, an exemplary diagram of the vehicle battery safety sensor system 10 of the present disclosure includes the safety module 24 in communication with all of the sensors. The safety module 24 may provide computational capability and therefore may include features such as a memory including an EEPROM 58. The safety module 24 receives the output signals from each of the multiple sensors such as the battery leak methane gas sensor 29, the first, second, third, and fourth impact sensors 30, 32, 34, 36, the impact sensor 37 located within the safety module 24, the moisture sensors 42, the battery fluid leak sensors 54, and the accelerometers 56 and coordinates an output signal indicating a condition of the battery pack 12 and the frame 16. The safety module 24 is in communication with a vehicle main computer such as an electronic control unit (ECU) 60 via a high speed CAN interface 62. A connector 64 is provided with the safety system 10 providing power and communication terminals, including a high speed CAN 66 and a low speed CAN 68 for communication with the ECU 60. A safety module power supply 70 is also connected via the connector 64 to a positive power terminal 72 and a ground terminal 74, thereby providing backup power for operation of the safety module 24 if power from the battery pack 12 is unavailable.

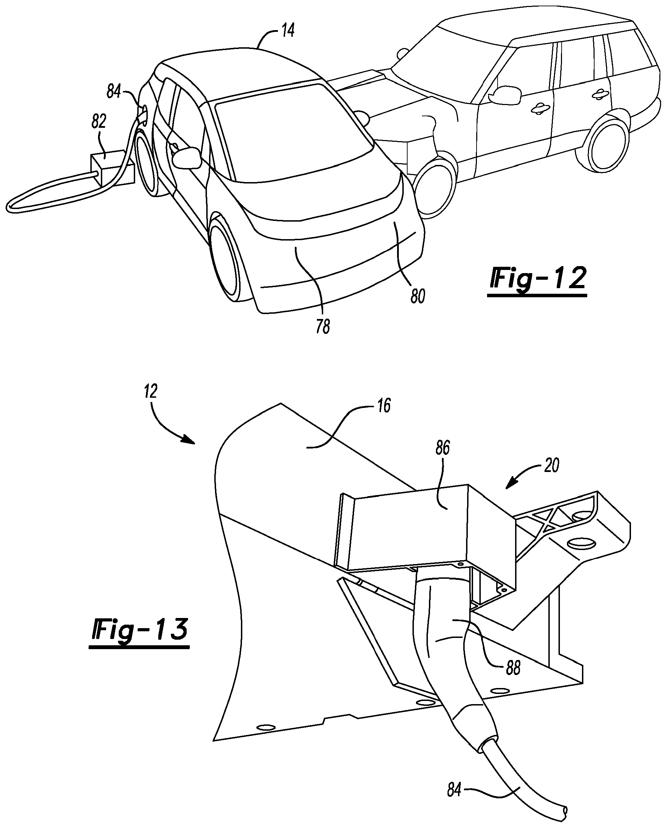

A warning module 76 is also in communication with the vehicle ECU 60, such that when a signal is forwarded by the safety module 24 to the vehicle ECU 60 the vehicle ECU 60 may energize any one or all of multiple different vehicle external warnings, including sounding of a vehicle horn or a separate sound emitting device in a pattern indicative of a condition of the battery pack 12 such as a rapid on-off sounding of the horn, flashing of either or both of the vehicle headlights or rear tail-lights in a pattern indicative of a condition of the battery pack 12 such as a predetermined on-off sequence, a remote signal sent via a wireless signal device, an internal message directed to the operator of the vehicle 14 such as a text message indicating the condition of the battery pack such as for example a smoke condition or structural damage to the frame 16, and the like can be initiated in the event of an output signal being transmitted from any one of the sensors of the vehicle battery safety sensor system 10. The warning module 76 is in communication with the safety module 24, such that the warning module 76 when initiated by a signal from the safety module 24 energizes a signaling device described in reference to FIG. 12 providing external vehicle indication of a status of the battery pack 12.

Referring to FIG. 12 and again to FIGS. 1 and 11, if the vehicle 14 is in an accident or damage occurs to the frame 16, the vehicle battery safety sensor system 10 using the safety module 24 forwards signals from the various sensors to the vehicle ECU 60, which determines based on a condition of the vehicle 14 whether to provide external visual indication of the vehicle condition to a first responder by energizing operation of a signaling device such as but not limited to vehicle lights 78 such as the headlights and taillights. A predetermined pattern of light operation such as for example by blinking three times can indicate smoke in the battery pack 12 or a battery fire, or by blinking four times can indicate a battery leak. The signaling device can also define an external audible indication of the vehicle condition which can be provided by operation of a sound emitting device or vehicle horn 80. A first responder can also provide a stranded energy discharge device 82 and an energy discharge cable 84 which may be used to discharge the stored energy charge of the battery pack 12. Signals from the safety module 24 can be transmitted even in the event that the power supply from the 12 VDC battery pack 12 is cut by a first responder in an emergency.

Referring to FIG. 13 and again to FIGS. 3 and 12, because it must be assumed the battery pack 12 holds a charge, the stranded energy discharge module 20 of the battery pack 12 includes a power discharge port 86 which can be connected to the multiple battery cells 26 of the battery pack 12 via a passage created through the frame 16. Energy from the multiple battery cells 26 of the battery pack 12 can be bled off to the energy discharge device 82 via the energy discharge cable 84 which is adapted to connect directly to the power discharge port 86.

A vehicle battery safety sensor system 10 including a safety module 24 of the present disclosure offers several advantages. These include the provision of multiple different types of sensors directly in or supported on the frame 16 of the battery pack 12, each communicating with the safety module 24 to centrally collect any sensor output signals. The sensors provide indication of the condition of the battery pack 12 both to the vehicle operator such as to a center stack or to a speedometer gage cluster, and to parties passing the vehicle 14 and to a first responder if the vehicle 14 is in an accident or is stranded. The safety module 24 of the present disclosure provides a unified collector for all of the sensor output signals for subsequent communication with the vehicle ECU.

A signal generated by any of the sensors of the present disclosure indicates an "abnormal condition" present within the chamber or bay 38 of the frame 16, or present in the structure defining the frame 16. The abnormal condition can therefore be smoke or gas, fire, a liquid present within the bay 38, structural deformation resulting from strain loading, and the like.

## Claims

1. A battery system for a vehicle (14), comprising:
a battery pack (12) having a structure defining a chamber receiving a battery, the structure including a frame having an outer wall defining a portion of the chamber;
a first sensor mounted to the structure for sensing an operating condition of the battery system within the chamber, the first sensor mounted within the chamber on the inside of the outer wall of the chamber;
a safety module (24) disposed outside of the chamber, the safety module (24) processing signals received from the first sensor, the safety module (24) sending a first safety module signal when the signals received from the first sensor indicate an abnormal condition; and
an impact sensor (37) located within the safety module (24); and **characterized in that**
the structure includes a bottom wall (47) and the first sensor defines a moisture sensor (42) positioned on the bottom wall (47) and wherein the bottom wall (47) includes a low point (40), with the moisture sensor (42) positioned at the low point (40).

2. The battery system for a vehicle (14) of claim 1, wherein the first sensor is used for sensing the operating condition within the chamber; wherein the safety module (24) processes signals received from the first sensor to identify if the operating condition defines an abnormal condition occurring within the chamber; and wherein the safety module (24) sends the safety module signal when the signals received from the first sensor indicate the abnormal condition is present within the chamber.

3. The battery system for a vehicle (14) of claim 1 or 2, wherein the first sensor is a smoke sensor (48) or a gas sensor mounted to the structure.

4. The battery system for a vehicle (14) of claims 1 to 3, wherein the outer wall is attached to the vehicle (14).

5. The battery system for a vehicle (14) of claims 1 or 2, wherein:
the battery includes multiple battery cells (26),
the structure includes a cross beam (28) defining a plurality of sub-chambers each receiving at least one of the multiple battery cells (26), and
the first sensor defines multiple identical sensors having individual ones of the multiple identical sensors mounted in each of the sub-chambers.

6. The battery system for a vehicle (14) of claims 1 or 2, further including a second sensor mounted within the chamber detecting an operating condition within the chamber different from the operating condition sensed by the first sensor, the safety module (24) sending a second safety module signal when the signals received from the second sensor define abnormal conditions present within the chamber.

7. The battery system for a vehicle (14) of any one of claims 1 to 6, wherein the safety module (24) is mounted to the outer wall.

## Patentansprüche

1. Ein Batteriesystem für ein Fahrzeug (14), umfassend:
einen Batteriesatz (12) mit einer Struktur, die eine Kammer definiert, die eine Batterie aufnimmt, wobei die Struktur einen Rahmen mit einer Außenwand umfasst, die einen Teil der Kammer definiert;
einen ersten Sensor, der an der Struktur angebracht ist, um einen Betriebszustand des Batteriesystems innerhalb der Kammer zu erfassen, wobei der erste Sensor innerhalb der Kammer an der Innenseite der Außenwand der Kammer angebracht ist;
ein Sicherheitsmodul (24), das außerhalb der Kammer vorgesehen ist, wobei das Sicherheitsmodul (24) von dem ersten Sensor empfangene Signale verarbeitet, wobei das Sicherheitsmodul (24) ein erstes Sicherheitsmodul-Signal sendet, wenn die von dem ersten Sensor empfangenen Signale einen anormalen Zustand anzeigen; und
einen Aufprallsensor (37), der innerhalb des Sicherheitsmoduls (24) angeordnet ist; und **dadurch gekennzeichnet, dass**
die Struktur eine Bodenwand (47) umfasst und der erste Sensor einen Feuchtigkeitssensor (42) definiert, der auf der Bodenwand (47) positioniert ist, und wobei die Bodenwand (47) einen Tiefpunkt (40) umfasst, wobei der Feuchtigkeitssensor (42) an dem Tiefpunkt (40) positioniert ist.

2. Das Batteriesystem für ein Fahrzeug (14) nach Anspruch 1, wobei der erste Sensor zum Erfassen des Betriebszustands innerhalb der Kammer verwendet wird; wobei das Sicherheitsmodul (24) Signale verarbeitet, die von dem ersten Sensor empfangen werden, um zu identifizieren, ob der Betriebszustand einen anormalen Zustand definiert, der innerhalb der Kammer auftritt; und wobei das Sicherheitsmodul (24) das Sicherheitsmodul-Signal sendet, wenn die von dem ersten Sensor empfangenen Signale anzeigen, dass der anormale Zustand innerhalb der Kammer vorliegt.

3. Das Batteriesystem für ein Fahrzeug (14) nach Anspruch 1 oder 2, wobei der erste Sensor ein Rauchsensor (48) oder ein Gassensor ist, der an der Struktur angebracht ist.

4. Das Batteriesystem für ein Fahrzeug (14) nach den Ansprüchen 1 bis 3, wobei die Außenwand an dem Fahrzeug (14) befestigt ist.

5. Das Batteriesystem für ein Fahrzeug (14) nach den Ansprüchen 1 oder 2, wobei die Außenwand an dem Fahrzeug (14) befestigt ist:
die Batterie mehrere Batteriezellen (26) enthält,
die Struktur einen Querträger (28) enthält, der eine Vielzahl von Unterkammern definiert, die jeweils mindestens eine der mehreren Batteriezellen (26) aufnehmen, und
der erste Sensor definiert mehrere identische Sensoren, wobei einzelne der mehreren identischen Sensoren in jeder der Unterkammern montiert sind.

6. Das Batteriesystem für ein Fahrzeug (14) nach Anspruch 1 oder 2, das ferner einen zweiten Sensor enthält, der innerhalb der Kammer angebracht ist und einen Betriebszustand innerhalb der Kammer erfasst, der sich von dem durch den ersten Sensor erfassten Betriebszustand unterscheidet, wobei das Sicherheitsmodul (24) ein Signal des zweiten Sicherheitsmoduls sendet, wenn die vom zweiten Sensor empfangenen Signale anormale Zustände definieren, die innerhalb der Kammer vorliegen.

7. Das Batteriesystem für ein Fahrzeug (14) nach einem der Ansprüche 1 bis 6, bei dem das Sicherheitsmodul (24) an der Außenwand montiert ist.

## Revendications

1. Un système de batterie pour un véhicule (14), comprenant :
un bloc de batterie (12) ayant une structure définissant une chambre recevant une batterie, la structure comprenant un cadre ayant une paroi extérieure définissant une partie de la chambre;
un premier capteur monté sur la structure pour détecter une condition de fonctionnement du système de batterie à l'intérieur de la chambre, le premier capteur étant monté à l'intérieur de la chambre sur la face intérieure de la paroi extérieure de la chambre ;
un module de sécurité (24) disposé à l'extérieur de la chambre, le module de sécurité (24) traitant les signaux reçus du premier capteur, le module de sécurité (24) envoyant un premier signal du module de sécurité lorsque les signaux reçus du premier capteur indiquent une condition anormale; et
un capteur d'impact (37) situé dans le module de sécurité (24); et **caractérisé en ce que**
la structure comprend une paroi inférieure (47) et le premier capteur définit un capteur d'humidité (42) positionné sur la paroi inférieure (47) et dans laquelle la paroi inférieure (47) comprend un point bas (40), le capteur d'humidité (42) étant positionné au point bas (40).

2. Le système de batterie pour un véhicule (14) selon la revendication 1, dans lequel le premier capteur est utilisé pour détecter la condition de fonctionnement à l'intérieur de la chambre ; dans lequel le module de sécurité (24) traite les signaux reçus du premier capteur pour identifier si la condition de fonctionnement définit une condition anormale se produisant à l'intérieur de la chambre ; et dans lequel le module de sécurité (24) envoie le signal du module de sécurité lorsque les signaux reçus du premier capteur indiquent que la condition anormale est présente à l'intérieur de la chambre.

3. Le système de batterie pour un véhicule (14) de la revendication 1 ou 2, dans lequel le premier capteur est un capteur de fumée (48) ou un capteur de gaz monté sur la structure.

4. Le système de batterie pour un véhicule (14) selon les revendications 1 à 3, dans lequel la paroi extérieure est fixée au véhicule (14).

5. Le système de batterie pour un véhicule (14) selon la revendication 1 ou 2, dans lequel :
la batterie comprend plusieurs éléments de batterie (26),
la structure comprend une traverse (28) définissant une pluralité de sous-chambres recevant chacune au moins un des multiples éléments de batterie (26), et
le premier capteur définit plusieurs capteurs identiques dont certains sont montés dans chacune des sous-chambres.

6. Le système de batterie pour un véhicule (14) des revendications 1 ou 2, comprenant en outre un second capteur monté dans la chambre détectant une condition de fonctionnement dans la chambre différente de la condition de fonctionnement détectée par le premier capteur, le module de sécurité (24) envoyant un second signal du module de sécurité lorsque les signaux reçus du second capteur définissent des conditions anormales présentes dans la chambre.

7. Le système de batterie pour un véhicule (14) de l'une des revendications 1 à 6, dans lequel le module de sécurité (24) est monté sur la paroi extérieure..
